# FASCICULE DE BREVET EUROPEEN

(11) **EP 1 407 528 B1**
(45) Date de publication et mention de la délivrance du brevet: **04.10.2006**
(21) Numéro de dépôt: 02787151.6
(22) Date de dépôt: 12.07.2002
(51) Int. Cl.: H02K 29/08, H02K 21/16

(54) **MOTEUR POLYPHASE**
POLYPHASENMOTOR
POLYPHASE MOTOR

(30) Priorité: 18.07.2001 FR 0109601
(43) Date de publication de la demande: 14.04.2004
(73) Titulaire: Société Industrielle de Sonceboz S.A., 2604 Sonceboz (CH)
(72) Inventeur: PRUDHAM, Daniel, F-25220 Thise (FR)
(74) Mandataire: Rhein, Alain
(86) Numéro de dépôt international: PCT/FR2002/002503
(87) Numéro de publication internationale: WO 2003/009453

(56) Documents cités:
- DE-A- 19 905 748
- US-A- 5 909 072

## Description

L'invention concerne un moteur polyphasé constitué, d'une part, d'une partie fixe ou stator excitée par des bobines électriques et, d'autre part, par une partie mobile ou rotor présentant N paires de pôles aimantés radialement en sens alternés, N étant supérieur ou égal à 4 tout en étant différent d'un multiple de 3, et ledit stator présentant Px9 pôles identiques espacés de 40°/P, lesdits pôles statoriques étant regroupés consécutivement par trois de manière à définir une phase constituée d'un circuit en W, regroupant trois pôles statoriques consécutifs, le pôle statorique central portant le bobinage de ladite phase.

La présente invention concerne de façon générale le domaine des moteurs électriques polyphasés. En particulier, elle a trait à des moteurs de petite dimension, tels que ceux assurant l'entraînement devannes, par exemple d'admission d'air, sur des véhicules automobiles ou autres, et faisant par conséquent appel à des éléments de détection de la position du rotor.

De tels moteurs sont par exemple décrits dans le document FR-2 754 953. Ainsi, il est tout particulièrement fait référence à un moteur polyphasé constitué, d'une part, d'une partie fixe ou stator, excitée par des bobines électriques et, d'autre part, par une partie mobile ou rotor, aimanté. Celui-ci présente N1 paires de pôles aimantés radialement en sens alternés, N1 étant égal à 4 ou 5. Quant au stator, il comporte N2 pôles identiques, N2 étant égal à 9 de sorte que ces pôles sont espacés de 40°. Ils sont, par ailleurs, regroupés consécutivement par 3 de façon à ce que chaque phase soit constituée d'un circuit en W, regroupant trois pôles consécutifs du stator. Le pôle central du W porte le bobinage de ladite phase. En outre, les pôles centraux de deux circuits en W sont espacés angulairement de 120°.

Ces éléments sont disposés dans un même étage, c'est à dire sensiblement dans un même plan, afin d'optimiser le coût et l'encombrement des pièces qui les composent, tels les aimants.

Pour ce type de moteur, il est usuel de détecter le déplacement de la partie rotorique mobile dans le circuit magnétique. En fait, cette partie rotorique induit une variation de flux, variation pouvant être détectée par un capteur de position de type électromagnétique.

Aussi, de tels actionneurs sont susceptibles de donner une image représentative de la position de la charge entraînée directement ou, plus généralement, par l'intermédiaire d'un réducteur, grâce à un asservissement de position, supposant donc une électronique de commande idoine et un capteur de position de l'organe mobile. Ce capteur est, dans la plupart des cas, de type potentiométrique, magnétique ou optique et monté au dos de l'actionneur.

Il va de soi qu'un tel capteur de position crée, de ce fait, un encombrement supplémentaire au niveau de l'actionneur, sans compter qu'il convient de prolonger certains de ses éléments constitutifs, pour permettre cette détection de la rotation de l'organe mobile. Dans ce contexte il convient, encore de s'assurer que la présence de ces capteurs ne vienne influencer la propagation des flux magnétiques entre les différents pôles statoriques.

En outre dans une telle construction, la liaison électrique de ce ou ces capteurs et celle de l'actionneur vers la carte électronique d'asservissement s'avère relativement complexe.

Le document DE-A1-19905748 décrit un moteur polyphasé à aimant permanent du type sans balai, à pôles statoriques non identiques dans lequel les moyens de détection de la position du rotor sont disposés le long des chemins de dérivation magnétique.

Dans le cadre d'une première démarche inventive, l'on a cherché à résoudre les problèmes dus à l'externalisation des capteurs, en les intégrant directement et de manière idéale dans l'actionneur, plus particulièrement dans un même plan que les bobinages statoriques. Dans une seconde démarche inventive, il a été recherché une solution, non seulement susceptible de répondre aux contraintes ci-dessus, mais en plus ne nécessitant guère de modifications géométriques ou génériques des différents éléments composant l'actionneur, modifications handicapantes vis à vis des coûts de fabrication et de montage, de normalisation et de simplicité de fonctionnement.

A cet effet, l'invention concerne un moteur polyphasé constitué, d'une part, d'une partie fixe ou stator excitée par des bobines électriques et, d'autre part, par une partie mobile ou rotor présentant N paires de pôles aimantés radialement en sens alternés, N étant supérieur ou égal à 4 tout en étant différent d'un multiple de 3, et ledit stator présentant Px9 pôles identiques espacés de 40°/P, lesdits pôles statoriques étant regroupés consécutivement par trois de manière à définir une phase constituée d'un circuit en W, regroupant trois pôles statoriques consécutifs, le pôle statorique central portant le bobinage de ladite phase.

Selon l'invention, il comporte au moins un élément de détection de position du rotor placé dans un même plan que les pôles statoriques, dans un logement sensiblement à équidistance entre deux pôles statoriques consécutifs n'appartenant pas à une même phase.

Avantageusement, ledit logement est délimité par lesdits pôles statoriques consécutifs n'appartenant pas à une même phase.

Selon une autre caractéristique de l'invention, lesdits éléments de détection de position sont des sondes à effet Hall.

Selon une autre caractéristique de l'invention, lesdites sondes ont des sorties analogiques.

Selon une autre caractéristique de l'invention, lesdites sondes ont des sorties digitales.

Selon une autre caractéristique de l'invention, les pôles statoriques centraux portant la bobine d'une phase se présentent sous forme d'éléments rapportés au niveau de la structure statorique. Une telle conception présente l'avantage que les bobines peuvent être montées sur ces pôles centraux, non pas par simple engagement, mais par enroulement sur ces derniers. Au final, cela permet d'augmenter le volume de cuivre ayant pour effet de générer plus d'efficacité pour le moteur. A noter encore que cette manière de concevoir la structure statorique du moteur permet également d'augmenter la surface de ces pôles centraux en regard du rotor et, par voix de conséquence, celle de tous les pôles statoriques.

La présente invention sera mieux comprise à la lecture de la description qui va suivre accompagnée des dessins ci-joints se rapportant à des modes de réalisation donnés à titre d'exemples.
- la figure 1 correspond à une vue en coupe d'un moteur triphasé selon l'invention, c'est à dire comportant dans un même étage les trois phases moteur ainsi que un ou plusieurs éléments de détection de position du rotor.
- la figure 2 représente le schéma électrique de connexion des trois phases du moteur et également des trois sondes de Hall.
- la figure 3 est une représentation vectorielle des trois phases du moteur et la représentation des six secteurs angulaires déterminés par les trois détecteurs de position.
- la figure 4 représente en fonction de la position du rotor le couple obtenu pour trois cas d'alimentation des bobines, ainsi que les signaux issus des trois sondes.
- la figure 5 représente le couple obtenu en respectant l'alimentation des phases assurant un couple maximum.
- la figure 6 est une vue en coupe du moteur selon l'invention et où le pôle central de chaque circuit en W est un élément rapporté.

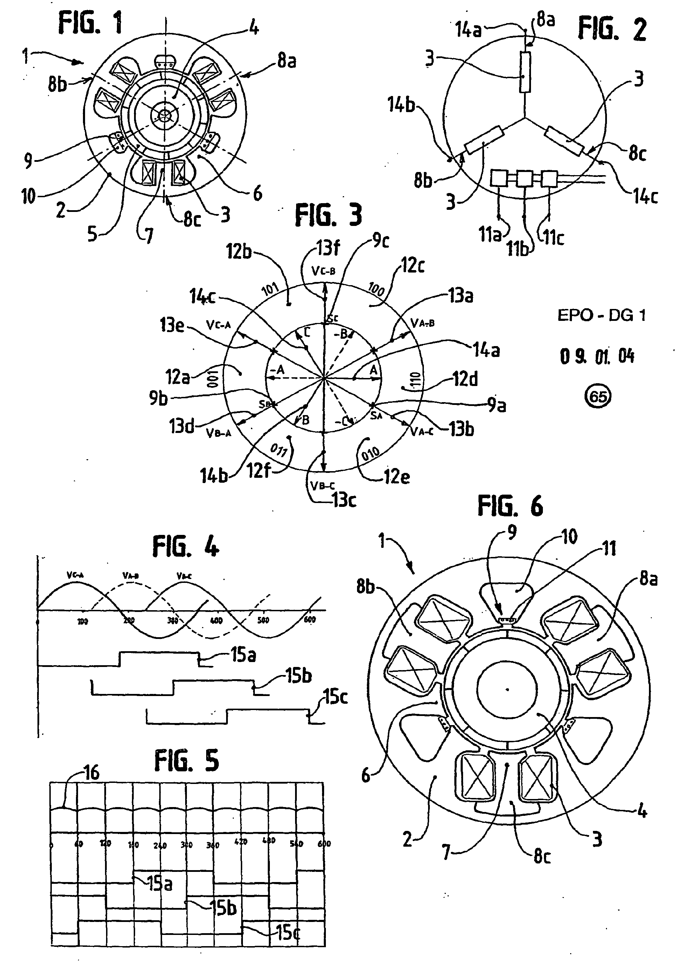

La figure 1 correspond à une vue en coupe d'un moteur triphasé 1 selon l'invention. La structure du moteur 1 est classique, celui-ci comportant, d'une part, une partie fixe ou stator 2, excitée par des bobines électriques 3 et, d'autre part, par une partie mobile ou rotor 4, aimantée.

Ledit rotor comporte N paires de pôles rotoriques 5 aimantés radialement en sens alternés, N étant supérieur ou égal à 4 tout en étant différent d'un multiple de 3. Dans le cadre du mode de réalisation correspondant aux figures du dessin joint, N est égal à 5.

Ledit stator présente Px9 pôles 6 dont les épanouissements sont identiques et espacés de 40°/P, lesdits pôles statoriques 6 étant regroupés consécutivement par trois de manière à définir une phase constituée d'un circuit en W, regroupant trois pôles statoriques consécutifs, le pôle statorique central 7 portant le bobinage 3 de ladite phase 8.

Dans les figures du dessin, il est représenté un moteur 1 dont le stator 2 comporte neuf pôles 6 identiques, P étant égal dans ce cas à 1. Aussi, ces pôles statoriques 6 sont espacés, ici de 40°. Les épanouissements polaires des pôles centraux 7 de deux circuits en W sont espacés angulairement de 120°.

Avantageusement, ce moteur 1 comporte au moins un élément de détection de position 9 du rotor 4 placé dans un même étage que les pôles statoriques 6, dans un logement 10 à équidistance entre deux pôles statoriques 6 consécutifs n'appartenant pas à une même phase 8.

Préférentiellement, il comporte autant d'éléments de détection de position 9 que de phases 8, un élément de détection 9 prenant position entre chacune des ces phases 8, dans les conditions mentionnées ci-dessus.

Plus particulièrement, entre deux pôles statoriques 6 consécutifs n'appartenant pas à une même phase est aménagé un logement 10, préférentiellement délimité par ces deux pôles 6, pour accueillir un tel élément de détection 9.

Ceux-ci, en étant à un nombre identique à celui des phases 8, permettent, non seulement le contrôle de position par comptage des pas du moteur 1, mais en outre la commande de ce dernier par mode d'autocommutation.

Dans les conditions spécifiées plus haut, les éléments de détection de position 9 se trouvent positionnés angulairement de manière optimale pour le contrôle du moteur 1 en mode d'autocommutation. En effet, les champs magnétiques générés par les bobines électriques 3 ne sont pas perturbateurs pour ces éléments qui ne sont donc sensibles qu'aux champs dus aux aimants permanents 5 du rotor. De plus, en étant placés dans un même étage que lesdits pôles statoriques 6, la présence de ces éléments de détection 9 n'a aucune conséquence néfaste sur les autres éléments constitutifs du moteur 1, en particulier en ce qui concerne le rotor 4, comme cela a été expliqué à propos des solutions adoptées jusqu'à ce jour, dans le cadre de l'exposé de l'état de la technique.

Les éléments de détection de position 9 sont, préférentiellement, des capteurs magnétiques et, plus précisément, des sondes à effet Hall 11 particulièrement sensibles aux variations de champ magnétique.

Les éléments de détection de position 9 peuvent être de type digital ou analogique. De type digital, ils permettent la discrimination de 6 secteurs angulaires 12 à l'intérieur de chaque paire de pôles 5 du rotor. De type analogique elles délivrent des signaux sinusoïdaux, là encore facilement exploitables.

La figure 2 représente le schéma électrique de connexion des trois phases 8 du moteur 1, notées respectivement 8a, 8b, 8c, ainsi que des trois sondes de Hall 11, notées respectivement 11a, 11b, 11c. Le montage en étoile des bobinages 3 du moteur 1 nécessite trois fils de sortie pour l'alimentation des phases 8. Il y a toujours deux bobinages 3 alimentés en même temps, et un bobinage 3 dans lequel ne circule aucun courant.

Les trois sondes à effet Hall 11 ont une alimentation et une masse communes, d'où un montage classique, avec cinq fils dédiés.

La figure 3 est une représentation vectorielle des 3 phases 8a, 8b, 8c du moteur, et la représentation des 6 secteurs angulaires 12 déterminés par les 3 éléments de détection de position 9, et respectivement notées 12a, 12b, 12c, 12d, 12e, 12f dans le sens anti-trigonométrique. Les trois phases 8a, 8b, 8c sont décalées électriquement de 120°. En utilisant un mode d'alimentation bipolaire, il est obtenu à l'intérieur d'une paire de pôles 6 positions stables ici représentées par les vecteurs 13a, 13b, 13c, 13d, 13e, 13f. Par exemple, le vecteur 13a représente la position stable obtenue en alimentant le moteur entre les fils de sortie 14a et 14b, le courant circulant de 14a vers 14b.
Les points de commutation des détecteurs de position 9 se situent graphiquement sur les mêmes vecteurs.

La figure 4 représente, en fonction de la position du rotor 4, le couple 16 obtenu pour trois cas d'alimentation des bobines 3, ainsi que les signaux 15 issus des trois sondes 11.

La figure 5 représente le couple 16 obtenu en respectant l'alimentation des phases 8 assurant un couple maximum.

La figure 6 est une vue en coupe du moteur 1 selon l'invention et où le pôle central 7 avec son bobinage de chaque circuit en W constitue un ensemble rapporté au niveau de la structure statorique. Cette conception permet une augmentation du volume de cuivre et de générer plus d'efficacité pour le moteur 1.

## Revendications

1. Moteur polyphasé (1) constitué, d'une part, d'une partie fixe ou stator (2) excitée par des bobines électriques (3) et, d'autre part, par une partie mobile ou rotor (4) présentant N paires de pôles (5) aimantés radialement en sens alternés, N étant supérieur ou égal à 4 tout en étant différent d'un multiple de 3 et ledit stator (2) présentant Px9 pôles (6) identiques, espacés de 40°/P, lesdits pôles statoriques (6) étant regroupés consécutivement par trois de manière à définir une phase (8) constituée d'un circuit en W, regroupant trois pôles statoriques (6) consécutifs, le pôle statorique central (7) portant le bobinage (3) de ladite phase (8), **caractérisé en ce qu'**au moins un élément de détection de position (9) du rotor (4) est placé dans un même plan que les pôles statoriques (6), dans un logement (10) sensiblement à équidistance entre deux pôles statoriques (6) consécutifs n'appartenant pas à une même phase (8).

2. Moteur polyphasé (1) selon la revendication 1, **caractérisé en ce qu'**il comporte autant d'éléments de détection de position (9) que de phases (8) prenant position dans un logement (10) défini entre chacune des ces dernières.

3. Moteur polyphasé (1) selon la revendication 1 ou 2, **caractérisé en ce que** ledit logement (10) est délimité par lesdits pôles statoriques (6) consécutifs n'appartenant pas à une même phase (8).

4. Moteur polyphasé (1) selon la revendication 2,**caractérisé en ce que** les éléments de détection de position (9) constituent, en outre, des moyens de commande du moteur (1) en mode d'autocommutation.

5. Moteur polyphasé (1) selon l'une des revendications précédentes, **caractérisé en ce que** lesdits éléments de détection de position (9) sont des sondes à effet Hall (11).

6. Moteur polyphasé (1) selon la revendication 5, **caractérisé en ce que** lesdites sondes (8) ont des sorties analogiques.

7. Moteur polyphasé (1) selon la revendication 5, **caractérisé en ce que** lesdites sondes (8) ont des sorties digitales.

8. Moteur polyphasé (1) selon l'une des revendications précédentes, **caractérisé en ce que** les pôles statoriques centraux (7) portant la bobine (3) d'une phase (8) se présentent sous forme d'éléments rapportés au niveau de la structure statorique.

## Claims

1. Polyphase motor (1) consisting, on the one hand, of a fixed part or stator (2) energized by electric coils (3) and, on the other hand, of a mobile part or rotor (4) including N pairs of poles (5) radially magnetized in alternate directions, N being not less than 4 while being other than a multiple of 3, and said stator (2) including Px9 identical poles (6), spaced apart by 40°/P, said stator poles (6) being assembled consecutively by three so as to define a phase consisting of a W-shaped circuit, assembling three consecutive stator poles (6), the central stator pole (7) bearing the winding (3) of said phase (8), **characterized in that** at least one element for detecting the position (9) of the rotor (4) is arranged in a common plane with the stator poles (6), in a housing (10) substantially equidistant between two consecutive stator poles (6) not belonging to a common phase (8).

2. Polyphase motor (1) according to claim 1, **characterized in that** it includes an equal number of position detection elements (9) and phases (8) positioned in a housing (10) defined between each of these phases.

3. Polyphase motor (1) according to claim 1 or 2, **characterized in that** said housing (10) is delimited by said consecutive stator poles (6) not belonging to a common phase (8).

4. Polyphase motor (1) according to claim 2, **characterized in that** the position detection elements (9) constitute, in addition, the controlling means of the motor (1) in autocommutation mode.

5. Polyphase motor (1) according to one of the preceding claims, **characterized in that** said position detection elements (9) are Hall effect probes (11).

6. Polyphase motor (1) according to claim 5, **characterized in that** said probes (8) have analog outputs.

7. Polyphase motor (1) according to claim 5, **characterized in that** said probes (8) have digital outputs.

8. Polyphase motor (1) according to one of the preceding claims, **characterized in that** the central stator poles (7) bearing the winding (3) of a phase (8) appear in the form of integrated elements at the level of the stator structure.

## Patentansprüche

1. Mehrphasiger Motor (1), bestehend, einerseits, aus einem fest stehenden Teil oder Stator (2), der durch elektrische Spulen (3) angeregt wird, und, andererseits, aus einem beweglichen Teil oder Rotor (4), der N Paare von Polen (5) aufweist, die radial in abwechselnden Richtungen magnetisiert sind, wobei N größer als oder gleich 4 sei, seiend jedoch verschieden von einem Vielfachen von 3, und der besagte Stator (2) Px9 identische, in 40°/P beabstandete Pole (6) aufweist, wobei die besagten statorischen Pole (6) aufeinanderfolgend je drei zusammengeschlossen sind, derart, um eine Phase (8) zu bilden, die durch einen W-förmigen Kreis gebildet ist, der drei aufeinanderfolgende statorischen Pole (6) zusammenschließt, wobei der zentrale statorische Pol (7) die Spulen (3) der besagten Phase (8) trägt, **dadurch gekennzeichnet, daß** wenigstens ein Element für die Feststellung der Position (9) des Rotors (4) in einer gleichen Ebene wie die statorischen Pole (6) in einer Aussparung (10) im wesentlichen in Äquidistanz zwischen zwei aufeinanderfolgenden statorischen Polen (6) gesetzt ist, die nicht zu derselben Phase (8) gehören.

2. Mehrphasiger Motor (1) nach Anspruch 1, **dadurch gekennzeichnet, daß** er so viel Elemente für die Positionsfeststellung (9) wie Phasen (8) umfaßt, die sich in einer Aussparung (10) positionieren, die zwischen jedem von diesen Letzteren gebildet ist.

3. Mehrphasiger Motor (1) nach Anspruch 1 oder 2, **dadurch gekennzeichnet, daß** die besagte Aussparung (10) durch die besagten aufeinanderfolgenden statorischen Pole (6), die nicht zu derselben Phase (8) gehören, abgegrenzt ist.

4. Mehrphasiger Motor (1) nach Anspruch 2, **dadurch gekennzeichnet, daß** die Elemente für die Positionsfeststellung (9) außerdem Mittel für die Steuerung des Motors (1) in der Betriebsart der Selbstumschaltung bilden.

5. Mehrphasiger Motor (1) nach irgendeinem der vorgehenden Ansprüche, **dadurch gekennzeichnet, daß** die besagten Elemente für die Positionsfeststellung (9) Sensoren mit Halleffekt (11) sind.

6. Mehrphasiger Motor (1) nach Anspruch 5, **dadurch gekennzeichnet, daß** die besagten Sensoren (8) analoge Ausgänge haben.

7. Mehrphasiger Motor (1) nach Anspruch 5, **dadurch gekennzeichnet, daß** die besagten Sensoren (8) digitale Ausgänge haben.

8. Mehrphasiger Motor (1) nach irgendeinem der vorgehenden Ansprüche, **dadurch gekennzeichnet, daß** die zentralen statorischen Pole (7), die die Spule (3) einer Phase (8) tragen, als Elemente ausgestaltet sind, die im Bereich der statorischen Struktur angebracht sind.
